(19) Europäisches Patentamt
European Patent Office
Office européen des brevets

(11) **EP 2 816 130 B1**

(12) **EUROPEAN PATENT SPECIFICATION**

(45) Date of publication and mention
of the grant of the patent:
**05.07.2017 Bulletin 2017/27**

(21) Application number: **13749053.8**

(22) Date of filing: **14.02.2013**

(51) Int Cl.:
*C22C 38/00* (2006.01)    *C21D 8/06* (2006.01)
*C21D 9/02* (2006.01)    *C21D 6/00* (2006.01)
*F16F 1/02* (2006.01)

(86) International application number:
**PCT/JP2013/054248**

(87) International publication number:
**WO 2013/122261 (22.08.2013 Gazette 2013/34)**

(54) **SPRING STEEL**

FEDERSTAHL

ACIER À RESSORT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **14.02.2012 JP 2012029893
28.09.2012 JP 2012217484**

(43) Date of publication of application:
**24.12.2014 Bulletin 2014/52**

(73) Proprietor: **JFE Steel Corporation
Tokyo 100-0011 (JP)**

(72) Inventors:
• **HONJO, Minoru
Tokyo 100-0011 (JP)**
• **UWAI, Kiyoshi
Tokyo 100-0011 (JP)**
• **MITAO, Shinji
Tokyo 100-0011 (JP)**

(74) Representative: **Grünecker Patent- und
Rechtsanwälte
PartG mbB
Leopoldstraße 4
80802 München (DE)**

(56) References cited:
**JP-A- H1 025 537      JP-A- S61 183 442
JP-A- S62 274 058      JP-A- S62 274 058
JP-A- S63 216 951      JP-A- S63 216 951
JP-A- S63 223 148      JP-A- 2003 105 496
JP-A- 2003 105 496**

**Description**

TECHNICAL FIELD

The present invention relates to high strength spring steel that is used as the material of, e.g., suspension springs, torsion bars and stabilizers for automobiles, and in particular, to spring steel that possesses high strength as well as excellent decarburization resistance and that is suitably used for underbody parts of automobiles.

BACKGROUND ART

As the demand for improving fuel efficiency of automobiles and reducing carbon dioxide emission grows from the viewpoint of recent global environmental issues, there is an increasingly high demand for reducing the weight of automobiles. Particularly, there is a strong demand for reducing the weight of suspension springs as underbody parts of automobiles, whereby high stress design is applied to these suspension springs by using as a material thereof a strengthened material having a post quenching-tempering strength of 2000 MPa or more.

General-purpose spring steel has a post quenching-tempering strength of 1600 MPa to 1800 MPa or so, as prescribed in JIS G4801. Such spring steel is manufactured into a predetermined wire rod by hot rolling. Then, in the case of a hot-formed spring, the wire rod is thermally formed into a spring-like shape and subjected to subsequent quenching-tempering processes; or alternatively in the case of a cold formed spring, the wire rod is subjected to drawing and subsequent quenching-tempering processes before being formed into a spring-like shape.

For example, commonly used materials for suspension springs include SUP7 described in JIS G4801. SUP7, which contains Si in an amount of 1.8 mass% to 2.2 mass%, makes a surface layer susceptible to decarburization, especially ferrite decarburization, when manufactured into a predetermined wire rod by hot rolling, which should adversely affect the properties (e.g., fatigue properties) of the resulting springs. Ferrite decarburization is a phenomenon in which austenite phase transforms to ferrite phase in association with decarburization, and that is caused by decarburization of surfaces of a steel material occurring when the steel material is subjected to process steps such as heating or hot rolling steps, as well as other process steps such as hot forming or quenching where a steel wire rod for spring is heated. Since suppressing this ferrite decarburization is beneficial not only for ensuring the fatigue properties of the resulting springs, but also for eliminating the need to perform a peeling step or the like to remove any decarburized layers, improving yields, and so on. As such, various approaches have been proposed to suppress ferrite decarburization

For example, JP 2003-105496 A (PTL 1) discloses a technique for suppressing ferrite decarburization by controlling the total content of Cu and Ni (Cu + Ni). However, since ferrite decarburization is a phenomenon in which the amount of carbon decreases in a surface layer region of the steel material so that the surface layer region has ferrite single-phase structure, it is difficult to surely suppress ferrite decarburization even by controlling the content of Cu + Ni in the range of 0.20 mass% to 0.75 mass%.

JP 2009-068030 A (PTL 2) discloses a steel wire rod for spring having excellent decarburization resistance and wiredrawability, which is obtained by controlling the content of C, Si, Mn, Cr, P and S and controlling the crystal grain size of a wire rod. However, since ferrite decarburization is a phenomenon in which the amount of carbon decreases in a surface layer region of the steel material so that the surface layer region has ferrite single-phase structure, it is difficult to surely suppress ferrite decarburization even by controlling the crystal grain size of the wire rod while adjusting the content of C, Si, Mn, Cr, P and S.

JP 2003-268453 A (PTL 3) discloses a technique for suppressing ferrite decarburization by terminating the finish rolling when the surface temperature reaches a temperature range of 800 °C to 1000 °C, coiling the steel wire after rolling in the form of a coil without subjecting the steel wire to water cooling before coiling, and at a cooling step after the coiling, cooling the steel wire at a rate equal to or lower than that of air cooling, without rapidly changing the cooling conditions, until the transformation is finished. However, since ferrite decarburization is a phenomenon in which the amount of carbon decreases in a surface layer region of the steel material so that the surface layer region has ferrite single-phase structure, it is difficult to suppress ferrite decarburization by controlling the manufacturing conditions alone.

JP 8-176737 A (PTL 4) discloses a technique to reduce decarburization by controlling the amount to combine minor constituents, Ni, Cu and S, that are normally contained in the steel in manufacturing spring steel. However, since ferrite decarburization is a phenomenon in which the amount of carbon decreases in a surface layer region of the steel material so that the surface layer region has ferrite single-phase structure, it is difficult to surely avoid a reduction in the amount of carbon in the surface layer region even by controlling the amount to combine Ni, Cu and S, in which case it is difficult to suppress ferrite decarburization.

JP 6-072282 B (PTL 5) discloses a technique to suppress ferrite decarburization by controlling the content of C, Si, Mn and Sb. PTL 5 discloses an example of a steel containing 0.55 mass% or more of C, which is advantageous for suppressing ferrite decarburization because of a large amount of C added in the steel. However, this technique still has difficulties in suppressing decarburization (in PTL 5, total decarburization) and avoiding deterioration in wiredrawability due to a large amount of C and Sb contained in the steel, although it can suppress ferrite decarburization.

CITATION LIST

Patent Literature

PTL 1: JP 2003-105496 A
PTL 2: JP 2009-068030 A
PTL 3: JP 2003-268453 A
PTL 4: JP 8-176737 A
PTL 5: JP 6-072282 B

JP S63 216951 discloses a steel containing, by weight, 0.30-0.75% C, 1.0-4.0% Si, 0.5-1.5% Mn, 0.1-2.0% Cr and <2.0% Ni, the contents of C, Si and Ni are regulated to 35C(%)+2Si(%)+Ni(%)<23%, and the balance consists of Fe with impurities. Said steel is quenched and the amount of the residual austenite is regulated to <10%. Among the impurities, <=0.0015% O, <=0.0010% N and <=0.010% S are furthermore regulated. By this method, the steel as a material suitable both for a hot molded coil spring and cold molded coil spring is obtained.

SUMMARY OF INVENTION

(Technical Problem)

As described above, further strengthening of suspension springs as underbody parts of automobiles has been desired in terms of improving fuel efficiency of automobiles and reducing carbon dioxide emission. However, any ferrite decarburization in a surface layer of a spring adversely affects the properties (e.g., fatigue properties) of the spring, there has been a problem associated with suppression of ferrite decarburization (which will also be referred to as "decarburization resistance"). In addition, another problem that has been raised is that due to an increase in C content and addition of alloy elements such as Cu, Ni or Sb, a spring material before wiredrawing becomes susceptible to generation of a hard phase, and therefore it has lower wiredrawability.
The present invention has been made to solve these problems, and an object of the present invention is to provide a spring steel that possesses higher strength and better decarburization resistance without impairing the properties of the spring steel, as compared to conventional high strength spring steel, by optimizing the amount of C, Si, Mn, Cr, Mo, Sb and Sn to be added.

(Solution to Problem)

To solve the above problems, the inventors of the present invention have found that it is possible to provide a material with improved decarburization resistance and wiredrawability while maintaining the properties thereof required for springs, by optimizing the amount of C, Si, Mn, Cr, Mo, Sb and Sn to be added, respectively, and by using an alloy design such that a DF value represented by formula (1) given below, a DT value represented by formula (2) below, and a WD value represented by formula (3) below fall within the appropriate range. As a result, the present invention has been accomplished.
Specifically, primary features of the present invention are specified in claim 1.

(Advantageous Effect of Invention)

According to the present invention, it is possible to provide a high strength spring steel in a stable manner that possesses much better decarburization resistance and wiredrawability than conventional high strength spring steel.

BRIEF DESCRIPTION OF DRAWINGS

The present invention will be further described below with reference to the accompanying drawings, wherein:

FIG. 1 illustrates the evaluation results of decarburization resistance as a function of the DF value;
FIG. 2 is a graph summarizing the evaluation results of wiredrawability as a function of the WD value;
FIG. 3 is an image of a metal structure where a ferrite decarburized layer is generated in a surface layer;

FIG. 4 is an image of a metal structure where a ferrite decarburized layer is not generated in a surface layer; and FIG. 5 is an image of a metal structure where a decarburized layer, which is not a ferrite decarburized layer, is generated in a surface layer.

DESCRIPTION OF EMBODIMENTS

A spring steel of the invention will be described in detail below. Firstly, a chemical composition of the high strength spring steel of the present invention will be described.

$$0.35 \text{ mass}\% \leq C \leq 0.45 \text{ mass}\%$$

Carbon (C) is an element that is essential for ensuring the required strength of the steel. If C content in the steel is less than 0.35 mass%, it is difficult to ensure a predetermined strength, or it is necessary to add a large amount of alloy elements to ensure a predetermined strength, which leads to an increase in alloy cost. Accordingly, the C content is to be 0.35 mass% or more. Additionally, the lower the C content, the more the steel is susceptible to generation of ferrite decarburization. On the other hand, C content exceeding 0.45 mass% leads to degradation in toughness, as well as deterioration in the wiredrawability of a wire rod during hardening and wiredrawing. In view of the above, the C content is to be 0.35 mass% or more and 0.45 mass% or less, preferably 0.36 mass% or more and 0.45 mass% or less.

$$1.75 \text{ mass}\% \leq Si \leq 2.40 \text{ mass}\%$$

Silicon (Si) is an element that improves the strength and sag resistance of the steel when used as a deoxidizer, and through solid solution strengthening and enhancement of resistance to temper softening. In the present invention, Si is added to the steel in an amount of 1.75 mass% or more. However, if added in an amount exceeding 2.40 mass%, Si causes ferrite decarburization in manufacturing springs. Accordingly, the upper limit of Si is to be 2.40 mass%. In view of the above, the Si content is to be 1.75 mass% or more and 2.40 mass% or less, preferably 1.80 mass% or more and 2.35 mass% or less.

$$0.1 \text{ mass}\% \leq Mn \leq 1.0 \text{ mass}\%$$

Manganese (Mn) is an element that is useful for improving the quench hardenability of the steel and enhancing the strength thereof. Accordingly, Mn is added to the steel in an amount of 0.1 mass % or more. However, if Mn is added to the steel in an amount greater than 1.0 mass%, the steel is excessively strengthened, leading to a reduction in the toughness of the base steel. Accordingly, the upper limit of Mn is to be 1.0 mass%. In view of the above, the Mn content is to be 0.1 mass% or more and 1.0 mass% or less, preferably 0.2 mass% or more and 1.0 mass% or less.

$$P \leq 0.025 \text{ mass}\%$$

$$S \leq 0.025 \text{ mass}\%$$

Phosphorus (P) and sulfur (S) are elements that are segregated at grain boundaries and cause a reduction in the toughness of the base steel. In view of this, it is preferable that these elements are reduced as much as possible. Accordingly, P and S are to be contained in the steel in an amount of 0.025 mass% or less, respectively. Since it is costly to reduce the content of each element to less than 0.0002 mass%, industrially speaking, the content of each element only needs to be reduced to 0.0002 mass%.

$$0.01 \text{ mass}\% \leq Cr < 0.50 \text{ mass}\%$$

Chromium (Cr) is an element that improves the quench hardenability of the steel and enhances the strength thereof.

Accordingly, Cr is to be added to the steel in an amount of 0.01 mass% or more. However, if Cr is added to the steel in an amount of 0.50 mass% or more, the steel is excessively strengthened, leading to a reduction in the toughness of the base steel. In addition, Cr is an element that reduces the pitting corrosion resistance as it causes a drop in the pH at the pit bottom. In view of the above, the Cr content is to be 0.01 mass% or more and less than 0.50 mass%, preferably 0.01 mass% or more and 0.49 mass% or less.

$$0.01 \text{ mass\%} \leq \text{Mo} \leq 1.00 \text{ mass\%}$$

Molybdenum (Mo) is an element that improves the quench hardenability and post-tempering strength of the steel. To obtain this effect, Mo is to be added to the steel in an amount of 0.01 mass% or more. However, if added in an amount exceeding 1.00 mass%, the addition of Mo leads to an increase in alloy cost. In this case, the steel is excessively strengthened, leading to a reduction in the toughness of the base steel. In view of the above, the Mo content is to be 0.01 mass% or more and 1.00 mass% or less, preferably 0.01 mass% or more and 0.95 mass% or less.

$$0.035 \text{ mass\%} \leq \text{Sb} \leq 0.12 \text{ mass\%}$$

Antimony (Sb) is an element that concentrates in a surface layer, inhibits dispersion of C from the steel and suppresses a reduction in the C content in the surface layer. Sb needs to be added to the steel in an amount of 0.035 mass% or more. However, if added in an amount exceeding 0.12 mass%, Sb would be segregated in the steel, which leads to deterioration in the toughness of the base steel and degradation in the wiredrawability. In addition, addition of Sb increases the quench hardenability of wires and generates hard phases such as bainite or martensite, which lowers the wiredrawability during drawing. In view of the above, the Sb content is to be 0.035 mass% to 0.12 mass%, more preferably 0.035 mass% to 0.115 mass%.

$$0.035 \text{ mass\%} \leq \text{Sn} \leq 0.20 \text{ mass\%}$$

Tin (Sn) is an element that concentrates in a surface layer, inhibits dispersion of C from the steel. Sn needs to be added to the steel in an amount of 0.035 mass% or more. However, if added in an amount exceeding 0.20 mass%, Sn would be segregated in the steel, which may lead to degradation in the properties of the resulting springs. In addition, addition of Sn increases the quench hardenability of wires and generates hard phases such as bainite or martensite, which lowers the wiredrawability during drawing. In view of the above, the Sn content is to be 0.20 mass% or less, more preferably 0.035 mass% to 0.195 mass%. The present invention also encompasses a case where either of Sb or Sn is not intentionally added to the steel; if Sb is not added intentionally, Sb would be contained in the steel as an incidental impurity in an amount of less than 0.01 mass%, while Sn is not added intentionally, Sn would be contained in the steel as an incidental impurity in an amount of less than 0.01 mass%. In the formula (1) above, used as Sb content [Sb] and Sn content [Sn] are the amount of Sb and/or the amount of Sn contained in the steel as an incidental impurity or incidental impurities (in mass%), or when added intentionally, the amount of Sb and the amount of Sn intentionally added to the steel (in mass%).

$$\text{O} \leq 0.0015 \text{ mass\%}$$

Oxygen (O) is an element that is bonded to Si or A1 to form a hard oxide-based non-metal inclusion, which leads to deterioration in the properties of the resulting springs. Thus, lower O content gives a better result. In the present invention, however, up to 0.0015 mass% is acceptable.

$$0.23 \leq \text{DF value (Formula (1))} \leq 1.50$$

$$0.34 \leq \text{DT value (Formula (2))} \leq 0.46$$

## WD value (Formula (3)) ≤ 255

The experimental results from which the DF value, DT value and WD value were derived will now be described in detail below.

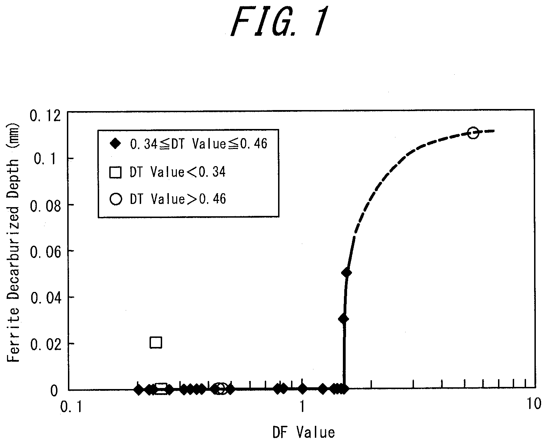

Specifically, the inventors of the present invention fabricated spring steel samples with different chemical compositions, DF values, DT values and WD values as shown in Table 1, and evaluated the decarburization resistance, toughness and wiredrawability of the respective samples. The evaluation results are shown in Table 2. The evaluation results on decarburization resistance are also summarized in FIG. 1 as a function of DF value. In Table 1, the value of each element represents its content (in mass%).

[Table 1]

Table 1

| Steel No. | C | Si | Mn | P | S I | Cr | Mo | Sn | Sb | O | DF Value | DT Value | WD Value | Remarks |
|---|---|---|---|---|---|---|---|---|---|---|---|---|---|---|
| A-1 | 0.60 | 2.00 | 0.85 | 0.020 | 0.015 | - | - | 0.001 | 0.005 | 0.0010 | 5.56 | 0.60 | 328 | Reference Steel |
| A-2 | 0.42 | 2.01 | 0.88 | 0.005 | 0.006 | 0.04 | 0.20 | 0.005 | 0.100 | 0.0009 | 0.46 | 0.41 | 248 | Inventive Steel |
| A-3 | 0.38 | 1.76 | 0.85 | 0.006 | 0.005 | 0.04 | 0.18 | 0.005 | 0.090 | 0.0008 | 0.49 | 0.42 | 225 | Inventive Steel |
| A-4 | 0.44 | 1.91 | 0.21 | 0.007 | 0.007 | 0.03 | 0.11 | 0.005 | 0.051 | 0.0007 | 0.78 | 0.45 | 250 | Inventive Steel |
| A-5 | 0.39 | 1.98 | 0.30 | 0.009 | 0.005 | 0.49 | 0.05 | 0.001 | 0.035 | 0.0008 | 1.41 | 0.39 | 219 | Inventive Steel |
| A-6 | 0.42 | 1.90 | 0.41 | 0.008 | 0.004 | 0.49 | 0.25 | 0.001 | 0.120 | 0.0006 | 0.37 | 0.43 | 251 | Inventive Steel |
| A-7 | 0.41 | 2.22 | 0.77 | 0.006 | 0.005 | 0.21 | 0.20 | 0.050 | 0.080 | 0.0007 | 0.42 | 0.36 | 247 | Inventive Steel |
| A-8 | 0.39 | 1.94 | 0.65 | 0.008 | 0.004 | 0.45 | 0.18 | 0.150 | 0.035 | 0.0008 | 0.27 | 0.39 | 247 | Inventive Steel |
| A-10 | 0.39 | 2.28 | 0.95 | 0.008 | 0.006 | 0.35 | 0.10 | 0.018 | 0.040 | 0.0007 | 1.01 | 0.34 | 223 | Inventive Steel |
| A-11 | 0.37 | 2.01 | 0.35 | 0.007 | 0.007 | 0.33 | 0.17 | 0.200 | 0.035 | 0.0008 | 0.23 | 0.35 | 245 | Inventive Steel |
| A-12 | 0.42 | 1.85 | 0.65 | 0.008 | 0.007 | 0.15 | 0.15 | 0.001 | 0.035 | 0.0007 | 1.22 | 0.45 | 235 | Inventive Steel |
| A-13 | 0.41 | 1.76 | 0.54 | 0.007 | 0.005 | 0.22 | 0.11 | 0.001 | 0.051 | 0.0006 | 0.83 | 0.46 | 233 | Inventive Steel |
| A-14 | 0.42 | 2.40 | 0.41 | 0.006 | 0.005 | 0.49 | 0.05 | 0.001 | 0.037 | 0.0007 | 1.50 | 0.35 | 236 | Inventive Steel |
| A-15 | 0.39 | 1.75 | 0.21 | 0.005 | 0.004 | 0.25 | 0.15 | 0.110 | 0.120 | 0.0008 | 0.20 | 0.42 | 255 | Comparative Steel |
| A-16 | 0.41 | 2.30 | 0.35 | 0.007 | 0.003 | 0.48 | 0.20 | 0.001 | 0.035 | 0.0009 | 1.56 | 0.35 | 230 | Comparative Steel |
| A-17 | 0.42 | 1.95 | 0.25 | 0.005 | 0.002 | 0.48 | 0.92 | 0.100 | 0.002 | 0.0007 | 0.46 | 0.42 | 248 | Inventive Steel |
| A-18 | 0.42 | 2.05 | 0.45 | 0.005 | 0.003 | 0.40 | 0.35 | 0.035 | 0.001 | 0.0008 | 1.36 | 0.41 | 235 | Inventive Steel |
| A-19 | 0.36 | 2.00 | 0.63 | 0.004 | 0.002 | 0.25 | 0.21 | 0.180 | 0.002 | 0.0008 | 0.31 | 0.35 | 230 | Inventive Steel |
| A-21 | 0.38 | 2.40 | 0.99 | 0.005 | 0.003 | 0.45 | 0.12 | 0.200 | 0.050 | 0.0008 | 0.25 | 0.30 | 254 | Comparative Steel |
| A-22 | 0.44 | 1.75 | 0.89 | 0.004 | 0.004 | 0.21 | 0.44 | 0.001 | 0.090 | 0.0007 | 0.44 | 0.49 | 256 | Comparative Steel |
| A-23 | 0.44 | 2.00 | 0.89 | 0.006 | 0.003 | 0.05 | 0.92 | 0.001 | 0.130 | 0.0009 | 0.35 | 0.42 | 264 | Comparative Steel |
| A-24 | 0.44 | 2.20 | 0.89 | 0.006 | 0.003 | 0.05 | 0.92 | 0.210 | 0.002 | 0.0009 | 0.24 | 0.39 | 279 | Comparative Steel |
| A-25 | 0.41 | 2.29 | 0.33 | 0.006 | 0.004 | 0.47 | 0.15 | 0.001 | 0.036 | 0.0007 | 1.51 | 0.35 | 230 | Comparative Steel |
| A-26 | 0.37 | 1.90 | 0.21 | 0.008 | 0.006 | 0.11 | 0.21 | 0.115 | 0.115 | 0.0008 | 0.22 | 0.37 | 245 | Comparative Steel |
| A-27 | 0.40 | 2.33 | 0.99 | 0.005 | 0.003 | 0.45 | 0.12 | 0.190 | 0.050 | 0.0008 | 0.24 | 0.33 | 263 | Comparative Steel |

(continued)

| Steel No. | C | Si | Mn | P | S I | Cr | Mo | Sn | Sb | O | DF Value | DT Value | WD Value | Remarks |
|---|---|---|---|---|---|---|---|---|---|---|---|---|---|---|
| A-28 | 0.43 | 1.76 | 0.89 | 0.006 | 0.005 | 0.21 | 0.44 | 0.001 | 0.090 | 0.0007 | 0.45 | 0.47 | 251 | Comparative Steel |
| A-29 | 0.44 | 2.00 | 0.89 | 0.007 | 0.004 | 0.05 | 0.21 | 0.020 | 0.085 | 0.0009 | 0.43 | 0.43 | 259 | Comparative Steel |
| A-30 | 0.35 | 1.84 | 0.91 | 0.005 | 0.001 | 0.05 | 0.21 | 0.035 | 0.001 | 0.0008 | 1.46 | 0.38 | 197 | Inventive Steel |

The spring steel samples were manufactured under the same conditions in order to investigate how the DF value, DT value and WD value affect the decarburization resistance. The manufacturing conditions were as follows. Firstly, cylindrical steel ingots (diameter: 200 mm, length: 400 mm) were obtained by steelmaking with vacuum melting, heated to 1000 °C, and then subjected to hot rolling to be finished to wire rods having a diameter of 15 mm. In this case, the heating was performed in the air atmosphere. Samples for microstructure observation (diameter: 15 mm, length: 10 mm) were taken from the wire rods after being subjected to the hot rolling.

It should be noted that the decarburization resistance and toughness were evaluated by the testing method specified in the examples, which will be described later.

While it is preferable that the toughness of spring steel samples is evaluated in the actually manufactured springs, in this case, the above-mentioned hot rolled wire rods having a diameter of 15 mm were used. Round bar test specimens having a diameter of 15 mm and a length of 100 mm were taken from the middle portions of these wire rods, and these specimens were subjected to quenching-tempering treatment. The quenching was performed at a heating temperature of 900 °C for a holding time of 15 minutes using oil cooling at 60 °C, while the tempering was performed at a heating temperature of 350 °C for a holding time of 60 minutes using water cooling. These round bar test specimens that had been subjected to the heat treatment were used for evaluation by means of the testing method specified in the examples described later.

In addition, the wiredrawability in manufacturing springs was evaluated in the following way: steel ingots (diameter: 200 mm, length: 400 mm) were obtained by steelmaking with vacuum melting, heated to 1000 °C, and then subjected to hot rolling to be finished to wire rods having a diameter of 13.5 mm, which wire rods in turn were drawn to a diameter of 12.6 mm, and evaluation was made based on the number of times these wire rods were broken when drawn to a length of 20 m.

Since Si facilitates generation of ferrite phase, C suppresses generation of ferrite phase, and Sb and Sn suppress a reduction in the C content in a surface layer, the ferrite decarburized depth was analyzed by using the DF value defined in the formula (1) above, assuming that the DF value might be used as an indicator of susceptibility to ferrite decarburization. As a result, as shown in Table 2 and FIG. 1, where the DF value is greater than 1.50, the C content in the surface layer of the spring decreased due to an increase in the amount of Si added and/or a reduction in the amount of C, Sn and Sb added, thereby causing ferrite decarburization, and consequently, lowering the decarburization resistance. On the other hand, where the DF value is less than 0.23, a decrease in the C content in the surface layer can be suppressed because of a reduction in the amount of Si added and/or an increase in the amount of C, Sn and Sb added, improving the decarburization resistance, in which case, however, a remarkable improvement was not observed. Further, where the DF value is less than 0.23, as mentioned above, the toughness tends to decrease due to an increase in the amount of C, Sn and Sb added. Based on this, it was found that improvement of decarburization resistance and maintenance of toughness may be accomplished by adjusting the DF value between 0.23 and 1.50.

Similarly, as shown in Table 2, where the DT value defined in the formula (2) above is less than 0.34, the C content in the surface layer of the spring decreased due to an increase in the amount of Si added and/or a reduction in the amount of C, Sn and Sb added, thereby causing ferrite decarburization, and consequently, lowering the decarburization resistance. In contrast, where the DT value is greater than 0.46, supply of C to the surface layer of the spring was delayed due to an increase in the amount of Sn and Sb added, which results in enhanced, rather than suppressed, decarburization as deep as 0.1 mm or more. Based on this, it was found that improvement of decarburization resistance is achieved by adjusting the DT value between 0.34 to 0.46.

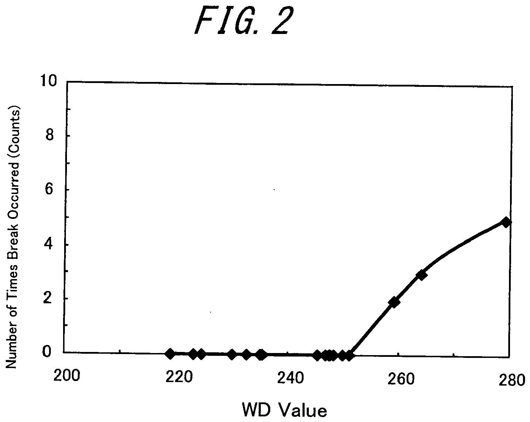

As described above, the decarburization resistance is improved by adjusting Sn content and/or Sb content. However, there was a concern that these elements might adversely affect the wiredrawability as they enhance the quench hardenability and facilitate generation of bainite and martensite in the resulting wires (wire rods after hot rolling). Therefore, as mentioned earlier, investigations were made on the wiredrawability to analyze how the content of C, Sb and Sn affects the wiredrawability. The results thereof are shown in Table 2 and FIG. 2. Plotted in FIG. 2 are only the results of those steel samples having DF values and DT values within the scope of the present invention. As shown in Table 2 and FIG. 2, where the WD value defined in the formula (3) above is greater than 255, on one hand, there is an increase in the content of C, Sn or Sb, which leads to an increase in the hardness of the resulting wire; and on the other hand, the quench hardenability is enhanced by Sn or Sb, which leads to generation of hard phase such as bainite or martensite, and therefore deteriorates the toughness and wiredrawability.

In the spring steel according to the present invention, the WD value is smallest when the C content is 0.35 mass% and either Sb or Sn content is 0.035 mass%, in which case the WD value is 197. That is, in the spring steel of the present invention, since the lower limits of C content and Sb or Sn content are specified, respectively, the WD value defined in the formula (3) above can only take a value not less than 197.

The smaller the WD value, the lower the C, Sn or Sb content. Thus, the hardness tends to decrease in manufacturing springs. In view of the above, the WD value is preferably not less than 220.

[Table 2]

Table 2

| Steel No. | Ferrite Decarburized Depth (mm) | Decarburized Depth (mm) | Toughness $uF_{20}$ ($J/cm^2$) | Number of Times Break Occurred (counts/20 m) | Wiredrawability | Remarks |
|---|---|---|---|---|---|---|
| A-1 | 0.11 | 0.15 | 13.3 | 1 | Poor | Reference Steel |
| A-2 | 0.00 | 0.02 | 45.7 | 0 | Good | Inventive Steel |
| A-3 | 0.00 | 0.01 | 49.8 | 0 | Good | Inventive Steel |
| A-4 | 0.00 | 0.02 | 51.3 | 0 | Good | Inventive Steel |
| A-5 | 0.00 | 0.03 | 47.7 | 0 | Good | Inventive Steel |
| A-6 | 0.00 | 0.02 | 45.4 | 0 | Good | Inventive Steel |
| A-7 | 0.00 | 0.02 | 45.5 | 0 | Good | Inventive Steel |
| A-8 | 0.00 | 0.03 | 46.7 | 0 | Good | Inventive Steel |
| A-10 | 0.00 | 0.02 | 45.1 | 0 | Good | Inventive Steel |
| A-11 | 0.00 | 0.03 | 47.4 | 0 | Good | Inventive Steel |
| A-12 | 0.00 | 0.02 | 49.9 | 0 | Good | Inventive Steel |
| A-13 | 0.00 | 0.03 | 51.1 | 0 | Good | Inventive Steel |
| A-14 | 0.00 | 0.02 | 46.9 | 0 | Good | Inventive Steel |
| A-15 | 0.00 | 0.07 | <u>15.3</u> | 6 | Poor | Comparative Steel |
| A-16 | <u>0.05</u> | <u>0.12</u> | 46.6 | 0 | Good | Comparative Steel |
| A-17 | 0.00 | 0.02 | 46.0 | 0 | Good | Inventive Steel |
| A-18 | 0.00 | 0.03 | 46.6 | 0 | Good | Inventive Steel |
| A-19 | 0.00 | 0.03 | 45.9 | 0 | Good | Inventive Steel |
| A-21 | 0.00 | <u>0.12</u> | 45.6 | 0 | Good | Comparative Steel |
| A-22 | 0.00 | <u>0.13</u> | 45.1 | 0 | Good | Comparative Steel |
| A-23 | 0.00 | 0.04 | 25.1 | 3 | Poor | Comparative Steel |

(continued)

| Steel No. | Ferrite Decarburized Depth (mm) | Decarburized Depth (mm) | Toughness $uF_{20}$ ($J/cm^2$) | Number of Times Break Occurred (counts/20 m) | Wiredrawability | Remarks |
|---|---|---|---|---|---|---|
| A-24 | 0.00 | 0.04 | 24.6 | 5 | Poor | Comparative Steel |
| A-25 | 0.03 | 0.11 | 50.3 | 0 | Good | Comparative Steel |
| A-26 | 0.00 | 0.06 | 16.2 | 4 | Poor | Comparative Steel |
| A-27 | 0.02 | 0.09 | 45.9 | 0 | Good | Comparative Steel |
| A-28 | 0.00 | 0.11 | 45.7 | 0 | Good | Comparative Steel |
| A-29 | 0.00 | 0.05 | 26.3 | 2 | Poor | Comparative Steel |
| A-30 | 0.00 | 0.03 | 47.3 | 0 | Good | Inventive Steel |

Further, in addition to the aforementioned elements, from the viewpoint of enhancing the strength of steel, the spring steel of the present invention may optionally contain the following elements:

at least one of Al: 0.50 mass% or less, Cu: 1.0 mass% or less, and Ni: 2.0 mass% or less.

Copper (Cu) and nickel (Ni) are elements that each enhance the quench hardenability and post-tempering strength of the steel, and may be selectively added to the steel. To obtain this effect, Cu and Ni are preferably added to the steel in an amount of 0.005 mass% or more, respectively. However, if Cu is added in an amount more than 1.0 mass% and Ni is added in an amount more than 2.0 mass%, then alloy cost increases rather than decreases. It is thus preferable that Cu is added in an amount up to 1.0 mass% and Ni is added in an amount up to 2.0 mass%.

Aluminum (Al) is an element that is useful as a deoxidizer and that suppresses growth of austenite grains during quenching to effectively maintain the strength of the steel. Thus, Al may preferably be added to the steel in an amount of 0.01 mass% or more. However, if Al is added to the steel in an amount exceeding 0.50 mass%, the effect attained by addition of Al reaches a saturation point, which leads to an increase in cost disadvantageously and deterioration in the cold coiling properties of the steel. It is thus preferable that Al is added in an amount up to 0.50 mass%.

Further, in addition to the aforementioned elements, in order to enhance the strength of the steel, the spring steel of the present invention may optionally contain the following elements:

at least one of W: 2.0 mass% or less, Nb: 0.1 mass% or less, Ti: 0.2 mass% or less, and V: 0.5 mass% or less.

W, Nb, Ti and V are elements that each enhance the quench hardenability and post-tempering strength of the steel, and may be selectively added to the steel depending on the required strength. To obtain this effect, it is preferable that W, Nb and Ti are added to the steel in an amount of 0.001 mass% or more, respectively, and that V is added to the steel in an amount of 0.002 mass% or more.

However, if V is added in an amount exceeding 0.5 mass%, Nb is added in an amount exceeding 0.1 mass%, and Ti is added in an amount exceeding 0.2 mass%, then many carbides are generated in the steel, which results in excessively enhanced strength and lower toughness of the steel. It is thus preferable that Nb, Ti and V are each added in an amount up to the above-identified upper limit. Further, if W is added in an amount exceeding 2.0 mass%, the strength of the steel is enhanced to such an excessive degree that it deteriorates the toughness of the steel and increases the alloy cost. It is thus preferable that W is added in an amount up to 2.0 mass%.

$$B \leq 0.005 \text{ mass\%}$$

Boron (B) is an element that increases the quench hardenability of the steel and thereby enhances the post-tempering strength thereof, and may be optionally contained in the steel. To obtain this effect, it is preferable that B is added in an amount of 0.0002 mass% or more. However, if added in an amount exceeding 0.005 mass%, B may deteriorate the cold workability of the steel. It is thus preferable that B is added in an amount of 0.005 mass% or less.

Any steel ingots may be used that have the chemical compositions as described above, regardless of whether being obtained by steelmaking in a converter or by vacuum smelting. A material, such as a steel ingot, slab, bloom or billet, is subjected to heating, hot-rolling, pickling for scale removal and subsequent wiredrawing to be finished to a drawn wire having a predetermined diameter, which is used as steel for springs.

The high strength spring steel thus obtained possesses excellent decarburization resistance and wiredrawability despite its low manufacturing cost, and may be applied to, for example, suspension springs as underbody parts of automobiles.

EXAMPLES

Steel samples having the chemical compositions shown in Table 3 (the value of each element in Table 3 represents the content (in mass%) of the element) were prepared by steelmaking in a converter to produce billets therefrom. These billets were heated to 1000 °C and subjected to hot rolling to be finished to wire rods having diameters of 15 mm and, for wiredrawability evaluation purpose, 13.5 mm. While the heating was performed in an atmosphere of mixed gas (M gas) of blast furnace gas and coke oven gas, it may also be performed in other atmospheres (e.g., in air, LNG, city gas, mixed gas such as COG/BFG mixture gas, COG, heavy oil, nitrogen, argon, and so on). Samples for microstructure observation (diameter: 15 mm, length: 10 mm) were taken from the wire rods after being subjected to the hot rolling, and the decarburization resistance and toughness of the spring steel samples were determined.

While it is preferable that the toughness of spring steel samples is evaluated in the actually manufactured springs, in this case, round bar test specimens having a diameter of 15 mm and a length of 100 mm were taken from the above-mentioned wire rods having a diameter of 15 mm, and these specimens were subjected to quenching-tempering treatment. Quenching was performed at a heating temperature of 900 °C for a holding time of 15 minutes using oil cooling at 60 °C, while tempering was performed at a heating temperature of 350 °C for a holding time of 60 minutes using water cooling. The obtained round bar test specimens were tested and evaluated in the following way.

Table 3

| Steel No. | C | Si | Mn | P | S | Cr | Mo | Sn | Sb | O | Al | Cu | Ni | W | Nb | Ti | V | B | DF Value | DT Value | WD Value | Remarks |
|---|---|---|---|---|---|---|---|---|---|---|---|---|---|---|---|---|---|---|---|---|---|---|
| A-1 | 0.60 | 2.00 | 0.85 | 0.020 | 0.015 | - | - | 0.001 | 0.005 | 0.0010 | - | - | - | - | - | - | - | - | 5.56 | 0.60 | 328 | Reference Steel |
| B-1 | 0.42 | 2.00 | 0.90 | 0.004 | 0.003 | 0.03 | 0.20 | 0.001 | 0.035 | 0.0009 | 0.03 | - | - | - | - | 0.021 | - | 0.0020 | 1.32 | 0.42 | 235 | Inventive Steel |
| B-2 | 0.46 | 2.01 | 0.88 | 0.004 | 0.003 | 0.09 | 0.20 | 0.001 | 0.035 | 0.0008 | 0.03 | 0.02 | 0.02 | - | - | 0.035 | - | - | 1.21 | 0.45 | 257 | Comparative Steel |
| B-3 | 0.43 | 1.99 | 0.88 | 0.005 | 0.003 | 0.02 | 0.19 | 0.001 | 0.051 | 0.0008 | 0.03 | - | - | - | - | 0.018 | - | 0.0019 | 0.89 | 0.43 | 244 | Inventive Steel |
| B-4 | 0.34 | 2.01 | 0.77 | 0.006 | 0.004 | 0.15 | 0.20 | 0.001 | 0.035 | 0.0009 | - | - | - | - | - | - | - | - | 1.64 | 0.33 | 192 | Comparative Steel |
| B-5 | 0.41 | 2.01 | 0.89 | 0.004 | 0.002 | 0.03 | 0.21 | 0.001 | 0.110 | 0.0009 | 0.03 | - | - | - | - | 0.021 | - | 0.0022 | 0.44 | 0.39 | 244 | Inventive Steel |
| B-6 | 0.36 | 1.89 | 0.21 | 0.005 | 0.003 | 0.49 | 0.51 | 0.110 | 0.110 | 0.0008 | 0.03 | 0.25 | 0.50 | - | - | 0.033 | - | - | 0.24 | 0.36 | 237 | Inventive Steel |
| B-8 | 0.38 | 1.99 | 0.77 | 0.006 | 0.003 | 0.25 | 0.05 | 0.001 | 0.130 | 0.0007 | 0.04 | - | - | - | - | - | - | - | 0.40 | 0.37 | 231 | Comparative Steel |
| B-9 | 0.42 | 2.08 | 0.68 | 0.007 | 0.002 | 0.35 | 0.06 | 0.020 | 0.034 | 0.0008 | 0.03 | - | - | - | - | - | - | - | 0.92 | 0.40 | 239 | Comparative Steel |
| B-10 | 0.36 | 1.76 | 0.45 | 0.005 | 0.003 | 0.48 | 0.71 | 0.090 | 0.120 | 0.0007 | 0.06 | 0.25 | 0.50 | 0.60 | - | 0.075 | 0.30 | 0.0019 | 0.23 | 0.39 | 235 | Inventive Steel |
| B-11 | 0.40 | 2.18 | 0.35 | 0.004 | 0.004 | 0.47 | 0.11 | 0.001 | 0.035 | 0.0008 | 0.02 | - | - | - | - | 0.031 | - | - | 1.51 | 0.36 | 224 | Comparative Steel |
| B-12 | 0.39 | 2.01 | 0.45 | 0.005 | 0.003 | 0.48 | 0.21 | 0.140 | 0.120 | 0.0007 | 0.03 | - | - | - | - | - | - | - | 0.20 | 0.36 | 261 | Comparative Steel |
| B-15 | 0.38 | 1.99 | 0.70 | 0.008 | 0.004 | 0.25 | 0.21 | 0.001 | 0.120 | 0.0007 | 0.03 | - | - | - | - | 0.025 | - | 0.0025 | 0.43 | 0.37 | 229 | Inventive Steel |
| B-16 | 0.39 | 2.05 | 0.88 | 0.007 | 0.003 | 0.15 | 0.60 | 0.035 | 0.035 | 0.0008 | 0.03 | 0.35 | 0.50 | - | - | 0.101 | 0.05 | 0.0015 | 0.75 | 0.37 | 225 | Inventive Steel |
| B-17 | 0.42 | 2.00 | 0.88 | 0.004 | 0.003 | 0.51 | 0.20 | 0.001 | 0.035 | 0.0008 | 0.03 | - | - | - | - | 0.020 | - | 0.0015 | 1.32 | 0.42 | 235 | Comparative Steel |
| B-18 | 0.36 | 2.00 | 0.75 | 0.005 | 0.002 | 0.15 | 0.20 | 0.185 | 0.050 | 0.0007 | 0.02 | - | - | - | - | - | - | - | 0.24 | 0.34 | 240 | Inventive Steel |
| B-19 | 0.44 | 1.89 | 0.92 | 0.005 | 0.002 | 0.15 | 0.18 | 0.001 | 0.035 | 0.0007 | 0.03 | - | - | - | - | - | - | - | 1.19 | 0.46 | 246 | Inventive Steel |
| B-20 | 0.40 | 1.75 | 0.88 | 0.007 | 0.003 | 0.25 | 0.13 | 0.001 | 0.035 | 0.0008 | 0.02 | - | - | - | 0.01 | - | - | - | 1.22 | 0.45 | 224 | Inventive Steel |
| B-21 | 0.41 | 2.40 | 0.87 | 0.006 | 0.004 | 0.25 | 0.15 | 0.005 | 0.035 | 0.0009 | 0.02 | - | - | 0.01 | - | - | - | - | 1.46 | 0.34 | 231 | Inventive Steel |
| B-22 | 0.43 | 2.01 | 0.10 | 0.006 | 0.002 | 0.45 | 0.11 | 0.001 | 0.035 | 0.0011 | - | 0.10 | 0.15 | - | - | - | - | - | 1.30 | 0.42 | 241 | Inventive Steel |
| B-23 | 0.40 | 2.00 | 1.00 | 0.005 | 0.005 | 0.15 | 0.09 | 0.001 | 0.037 | 0.0012 | - | - | - | - | - | 0.025 | 0.05 | 0.0011 | 1.32 | 0.40 | 225 | Inventive Steel |
| B-24 | 0.41 | 2.00 | 0.90 | 0.025 | 0.004 | 0.01 | 0.21 | 0.001 | 0.083 | 0.0008 | 0.03 | - | - | - | - | 0.021 | - | 0.0021 | 0.58 | 0.40 | 239 | Inventive Steel |
| B-25 | 0.41 | 1.99 | 0.89 | 0.009 | 0.025 | 0.04 | 0.22 | 0.001 | 0.075 | 0.0007 | 0.02 | - | - | - | - | - | - | - | 0.64 | 0.40 | 237 | Inventive Steel |
| B-26 | 0.43 | 2.25 | 0.91 | 0.008 | 0.003 | 0.48 | 0.01 | 0.001 | 0.110 | 0.0006 | 0.02 | - | - | - | - | 0.021 | | 0.0018 | 0.47 | 0.37 | 255 | Inventive Steel |
| B-27 | 0.37 | 1.75 | 0.10 | 0.007 | 0.006 | 0.01 | 1.00 | 0.077 | 0.115 | 0.0013 | - | - | - | 0.15 | 0.02 | - | - | - | 0.25 | 0.40 | 237 | Inventive Steel |
| B-28 | 0.38 | 2.10 | 0.77 | 0.006 | 0.005 | 0.02 | 0.23 | 0.001 | 0.120 | 0.0007 | 0.02 | - | - | - | - | - | - | - | 0.46 | 0.35 | 229 | Inventive Steel |
| B-29 | 0.44 | 2.43 | 0.88 | 0.013 | 0.008 | 0.15 | 0.21 | 0.001 | 0.041 | 0.0007 | 0.02 | - | - | - | - | - | - | - | 1.31 | 0.36 | 247 | Comparative Steel |
| B-30 | 0.44 | 2.38 | 1.10 | 0.012 | 0.007 | 0.21 | 0.17 | 0.001 | 0.037 | 0.0012 | - | - | - | - | - | - | - | - | 1.42 | 0.37 | 247 | Comparative Steel |
| B-31 | 0.42 | 2.01 | 0.90 | 0.027 | 0.005 | 0.15 | 0.08 | 0.001 | 0.036 | 0.0011 | - | 0.04 | 0.02 | - | - | - | - | - | 1.29 | 0.41 | 235 | Comparative Steel |
| B-32 | 0.43 | 1.99 | 0.87 | 0.005 | 0.027 | 0.33 | 0.07 | 0.001 | 0.042 | 0.0008 | 0.03 | - | - | - | 0.03 | - | - | - | 1.08 | 0.43 | 242 | Comparative Steel |
| B-33 | 0.41 | 1.79 | 0.67 | 0.006 | 0.004 | 0.41 | 1.03 | 0.001 | 0.037 | 0.0008 | 0.02 | - | - | - | - | - | - | - | 1.15 | 0.45 | 230 | Comparative Steel |
| B-34 | 0.42 | 2.01 | 0.92 | 0.005 | 0.004 | 0.03 | 0.21 | 0.050 | 0.002 | 0.0007 | 0.04 | - | - | - | - | 0.025 | - | 0.0021 | 0.92 | 0.41 | 238 | Inventive Steel |
| B-35 | 0.41 | 1.99 | 0.85 | 0.005 | 0.004 | 0.25 | 0.18 | 0.130 | 0.002 | 0.0006 | 0.03 | 0.15 | 0.15 | - | - | - | 0.15 | - | 0.37 | 0.40 | 248 | Inventive Steel |
| B-36 | 0.42 | 2.00 | 0.91 | 0.003 | 0.005 | 0.03 | 0.22 | 0.035 | 0.002 | 0.0007 | 0.04 | 0.20 | 0.20 | - | - | 0.030 | - | 0.0020 | 1.29 | 0.42 | 235 | Inventive Steel |
| B-38 | 0.39 | 1.99 | 0.82 | 0.005 | 0.005 | 0.49 | 0.05 | 0.080 | 0.001 | 0.0006 | 0.03 | - | - | 0.20 | 0.02 | - | - | - | 0.63 | 0.39 | 227 | Inventive Steel |
| B-39 | 0.42 | 2.18 | 0.80 | 0.006 | 0.005 | 0.25 | 0.12 | 0.210 | 0.002 | 0.0007 | 0.02 | 0.10 | 0.10 | - | - | - | - | - | 0.24 | 0.37 | 268 | Comparative Steel |
| B-40 | 0.42 | 2.00 | 0.89 | 0.005 | 0.005 | 0.25 | 0.15 | 0.034 | 0.001 | 0.0006 | 0.02 | 0.10 | 0.10 | - | - | - | - | - | 1.36 | 0.42 | 235 | Comparative Steel |

EP 2 816 130 B1

[Table 3]

Table 3 (cont'd)

| Steel No. | C | Si | Mn | P | S | Cr | Mo | Sn | Sb | O | Al | Cu | Ni | W | Nb | Ti | V | B | DF Value | DT Value | WD Value | Remarks |
|---|---|---|---|---|---|---|---|---|---|---|---|---|---|---|---|---|---|---|---|---|---|---|
| B-21 | 0.41 | 2.40 | 0.87 | 0.006 | 0.004 | 0.25 | 0.15 | 0.005 | 0.035 | 0.0009 | 0.02 | - | - | 0.01 | - | - | - | - | 1.46 | 0.34 | 228 | Inventive Steel |
| B-22 | 0.43 | 2.01 | 0.10 | 0.006 | 0.002 | 0.45 | 0.11 | 0.001 | 0.035 | 0.0011 | - | 0.10 | 0.15 | - | - | - | - | - | 1.30 | 0.42 | 238 | Inventive Steel |
| B-23 | 0.40 | 2.00 | 1.00 | 0.005 | 0.005 | 0.15 | 0.09 | 0.001 | 0.037 | 0.0012 | - | - | - | - | - | 0.025 | 0.05 | 0.0011 | 1.32 | 0.40 | 222 | Inventive Steel |
| B-24 | 0.41 | 2.00 | 0.90 | 0.025 | 0.004 | 0.01 | 0.21 | 0.001 | 0.083 | 0.0008 | 0.03 | - | - | - | - | 0.021 | - | 0.0021 | 0.58 | 0.40 | 233 | Inventive Steel |
| B-25 | 0.41 | 1.99 | 0.89 | 0.009 | 0.025 | 0.04 | 0.22 | 0.001 | 0.075 | 0.0007 | 0.02 | - | - | - | - | - | - | - | 0.64 | 0.40 | 232 | Inventive Steel |
| B-26 | 0.43 | 2.25 | 0.91 | 0.008 | 0.003 | 0.48 | 0.01 | 0.001 | 0.110 | 0.0006 | 0.02 | - | - | - | - | 0.021 | - | 0.0018 | 0.47 | 0.37 | 247 | Inventive Steel |
| B-27 | 0.37 | 1.75 | 0.10 | 0.007 | 0.006 | 0.01 | 1.00 | 0.077 | 0.115 | 0.0013 | - | - | - | 0.15 | 0.02 | - | - | - | 0.25 | 0.40 | 224 | Inventive Steel |
| B-28 | 0.38 | 2.10 | 0.77 | 0.006 | 0.005 | 0.02 | 0.23 | 0.001 | 0.120 | 0.0007 | 0.02 | - | - | - | - | - | - | - | 0.46 | 0.35 | 221 | Inventive Steel |
| B-29 | 0.44 | 2.43 | 0.88 | 0.013 | 0.008 | 0.15 | 0.21 | 0.001 | 0.041 | 0.0007 | 0.02 | - | - | - | - | - | - | - | 1.31 | 0.36 | 244 | Comparative Steel |
| B-30 | 0.44 | 2.38 | 1.10 | 0.012 | 0.007 | 0.21 | 0.17 | 0.001 | 0.037 | 0.0012 | - | - | - | - | - | - | - | - | 1.42 | 0.37 | 244 | Comparative Steel |
| B-31 | 0.42 | 2.01 | 0.90 | 0.027 | 0.005 | 0.15 | 0.08 | 0.001 | 0.036 | 0.0011 | - | 0.04 | 0.02 | - | - | - | - | - | 1.29 | 0.41 | 233 | Comparative Steel |
| B-32 | 0.43 | 1.99 | 0.87 | 0.005 | 0.027 | 0.33 | 0.07 | 0.001 | 0.042 | 0.0008 | 0.03 | - | - | - | 0.03 | - | - | - | 1.08 | 0.43 | 239 | Comparative Steel |
| B-33 | 0.41 | 1.79 | 0.67 | 0.006 | 0.004 | 0.41 | 1.03 | 0.001 | 0.037 | 0.0008 | 0.02 | - | - | - | - | - | - | - | 1.15 | 0.45 | 228 | Comparative Steel |
| B-34 | 0.42 | 2.01 | 0.92 | 0.005 | 0.004 | 0.03 | 0.21 | 0.050 | 0.002 | 0.0007 | 0.04 | 0.15 | 0.15 | - | - | 0.025 | - | 0.0021 | 0.92 | 0.41 | 235 | Inventive Steel |
| B-35 | 0.41 | 1.99 | 0.85 | 0.005 | 0.004 | 0.25 | 0.18 | 0.130 | 0.002 | 0.0006 | 0.03 | 0.20 | 0.20 | - | - | - | 0.15 | - | 0.37 | 0.40 | 239 | Inventive Steel |
| B-36 | 0.42 | 2.00 | 0.91 | 0.003 | 0.005 | 0.03 | 0.22 | 0.035 | 0.002 | 0.0007 | 0.04 | 0.20 | 0.20 | - | - | 0.030 | - | 0.0020 | 1.29 | 0.42 | 233 | Inventive Steel |
| B-37 | 0.42 | 2.03 | 0.83 | 0.006 | 0.003 | 0.03 | 0.18 | 0.190 | 0.002 | 0.0007 | 0.03 | - | - | - | - | 0.030 | - | 0.0018 | 0.25 | 0.40 | 251 | Inventive Steel |
| B-38 | 0.39 | 1.99 | 0.82 | 0.005 | 0.005 | 0.49 | 0.05 | 0.080 | 0.001 | 0.0006 | 0.03 | - | - | 0.20 | 0.02 | - | - | - | 0.63 | 0.39 | 222 | Inventive Steel |
| B-39 | 0.42 | 2.18 | 0.80 | 0.006 | 0.005 | 0.25 | 0.12 | 0.210 | 0.002 | 0.0007 | 0.02 | 0.10 | 0.10 | - | - | - | - | - | 0.24 | 0.37 | 253 | Comparative Steel |
| B-40 | 0.42 | 2.00 | 0.89 | 0.005 | 0.005 | 0.25 | 0.15 | 0.034 | 0.001 | 0.0006 | 0.02 | 0.10 | 0.10 | - | - | - | - | - | 1.36 | 0.42 | 233 | Comparative Steel |

[Decarburization Resistance]

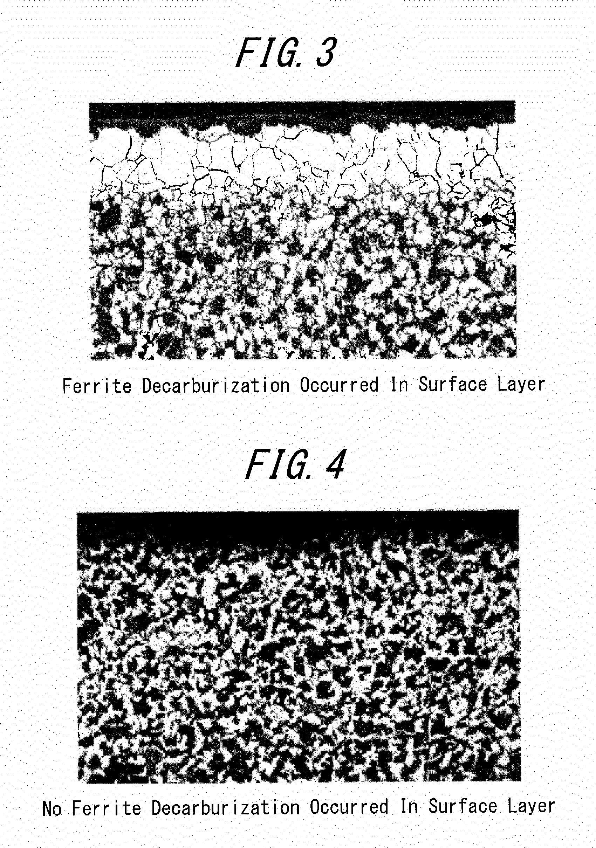

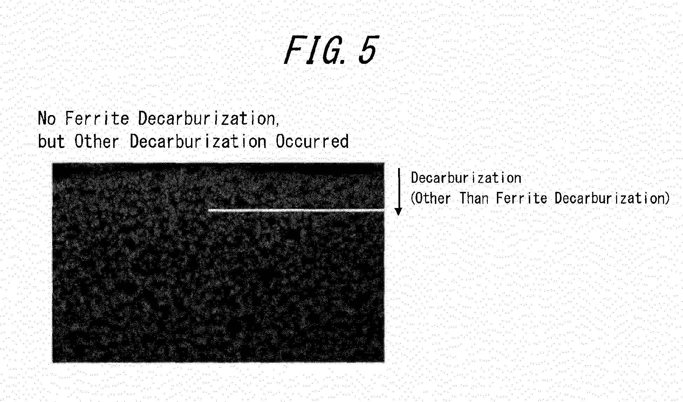

Decarburization resistance was determined by the presence or absence of ferrite single-phase microstructures in surface layers of the wire rods after being subjected to the hot rolling. The evaluation was performed according to JIS G0558 in the following way. Each wire rod after the hot rolling was cut into 10-mm long pieces in the longitudinal direction (rolling direction). To observe the microstructures of the cutting planes (cross-sections perpendicular to the longitudinal direction; hereinafter "C cross-sections"), the cut pieces were embedded in resin, mirror polished and then etched with 3 % nital, respectively, to observe the microstructures of the surface layers of the C cross-sections. In the case where any ferrite single-phase microstructure as shown in FIG. 3 appeared in the surface layer, it was assumed that ferrite decarburization occurred and the deepest portion of the ferrite decarburized layer was defined as the ferrite decarburized depth. In addition, in the case where the microstructure appeared as shown in FIG. 4, it was defined as absence of ferrite decarburization. Further, in the case where the microstructure appeared as shown in FIG. 5, i.e., any region with a low pearlite fraction was present in the surface layer, it was assumed that decarburization occurred although no ferrite decarburized layer was observed, and it was determined that good decarburization resistance could be obtained if the thickness of that region was less than 0.1 mm.

**[Toughness]**

Toughness was evaluated by using three 2-mm U-notched Charpy impact test specimens (height: 10 mm, width: 10 mm, length: 55 mm, notch depth: 2 mm, notch bottom radius: 1 mm), according to JIS Z 2242, with a test temperature of 20 °C, to calculate the absorbed energy of the respective test specimens, the values of which were divided by 0.8, respectively, and the obtained results were determined as impact values ($J/cm^2$). Then, the impact values of the three impact test specimens were averaged.

Since toughness is one of the properties required for spring steels, it was determined in the present invention that the test specimen showed a decrease in toughness if the toughness did not exceed twice the toughness of the reference steel.

**[Wiredrawability]**

Wiredrawability was evaluated in the following way: the above-mentioned wire rods having a diameter of 13.5 mm were drawn to a diameter of 12.6 mm and evaluated for their wiredrawability based on the number of times these wire rods were broken when drawn to a length of 20 m. Once such a break occurred, it was determined that the test specimen showed a decrease in the wiredrawability.

Table 4 illustrates the evaluation results of ferrite decarburized depth and toughness (impact resistance). It can be seen that steel samples indicated by steel sample Nos. B-1, B-3, B-5 to B-7, B-10, B-13 to B-16, B-18 to B-28 and B-34 to B-38 that satisfy the conditions of the chemical compositions, DF value, DT value and WD value of the present invention involves: no ferrite decarburization; decarburization as narrow as 0.1 mm or less; no break during drawing; good decarburization resistance; good wiredrawability; and good toughness. In contrast, those steel samples indicated by steel sample Nos. B-2, B-4, B-8 to B-9, B-17, B-29 to B-33 and B-39 to B-40 that have chemical compositions out of the scope of the present invention, as well as those steel samples indicated by steel sample Nos. B-11 to B-12 that have chemical compositions within the scope of the present invention, but have DF values out of the scope of the present invention involve a ferrite decarburized layer, or a decarburized layer as deep as 0.1 mm or more, or a decrease in the wiredrawability.

[Table 4]

Table 4

| Steel No. | Ferrite Decarburized Depth (mm) | Decarburized Depth (mm) | Toughness $uE_{20}$ $(J/cm^2)$ | Number of Times Break Occurred (counts/20 m) | Wiredrawability | Remarks |
|---|---|---|---|---|---|---|
| A-1 | 0.11 | 0.15 | 13.3 | 1 | Poor | Reference Steel |
| B-1 | 0.00 | 0.03 | 49.4 | 0 | Good | Inventive Steel |
| B-2 | 0.00 | 0.02 | 19.5 | 2 | Poor | Comparative Steel |
| B-3 | 0.00 | 0.03 | 50.0 | 0 | Good | Inventive Steel |
| B-4 | 0.09 | 0.15 | 50.1 | 0 | Good | Comparative Steel |
| B-5 | 0.00 | 0.02 | 48.9 | 0 | Good | Inventive Steel |
| B-6 | 0.00 | 0.03 | 50.1 | 0 | Good | Inventive Steel |
| B-8 | 0.00 | 0.11 | 19.7 | 2 | Poor | Comparative Steel |
| B-9 | 0.02 | 0.05 | 45.3 | 0 | Good | Comparative Steel |
| B-10 | 0.00 | 0.02 | 47.7 | 0 | Good | Inventive Steel |
| B-11 | 0.07 | 0.10 | 50.4 | 0 | Good | Comparative Steel |
| B-12 | 0.00 | 0.11 | 19.9 | 1 | Poor | Comparative Steel |
| B-15 | 0.00 | 0.05 | 49.7 | 0 | Good | Inventive Steel |
| B-16 | 0.00 | 0.04 | 47.0 | 0 | Good | Inventive Steel |
| B-17 | 0.00 | 0.02 | 21.3 | 1 | Poor | Comparative Steel |
| B-18 | 0.00 | 0.05 | 46.9 | 0 | Good | Inventive Steel |
| B-19 | 0.00 | 0.03 | 32.5 | 0 | Good | Inventive Steel |
| B-20 | 0.00 | 0.02 | 50.7 | 0 | Good | Inventive Steel |
| B-21 | 0.00 | 0.03 | 32.3 | 0 | Good | Inventive Steel |
| B-22 | 0.00 | 0.02 | 51.1 | 0 | Good | Inventive Steel |
| B-23 | 0.00 | 0.03 | 35.2 | 0 | Good | Inventive Steel |
| B-24 | 0.00 | 0.04 | 30.5 | 0 | Good | Inventive Steel |
| B-25 | 0.00 | 0.04 | 31.9 | 0 | Good | Inventive Steel |
| B-26 | 0.00 | 0.05 | 46.5 | 0 | Good | Inventive Steel |
| B-27 | 0.00 | 0.06 | 30.9 | 0 | Good | Inventive Steel |
| B-28 | 0.00 | 0.05 | 30.7 | 0 | Good | Inventive Steel |
| B-29 | 0.01 | 0.08 | 24.3 | 2 | Poor | Comparative Steel |
| B-30 | 0.00 | 0.03 | 23.1 | 2 | Poor | Comparative Steel |
| B-31 | 0.00 | 0.02 | 19.5 | 2 | Poor | Comparative Steel |
| B-32 | 0.00 | 0.05 | 21.2 | 2 | Poor | Comparative Steel |
| B-33 | 0.00 | 0.04 | 24.2 | 2 | Poor | Comparative Steel |
| B-34 | 0.00 | 0.02 | 43.3 | 0 | Good | Inventive Steel |
| B-35 | 0.00 | 0.03 | 41.5 | 0 | Good | Inventive Steel |
| B-36 | 0.00 | 0.02 | 43.6 | 0 | Good | Inventive Steel |
| B-38 | 0.00 | 0.04 | 39.9 | 0 | Good | Inventive Steel |
| B-39 | 0.00 | 0.11 | 23.5 | 3 | Poor | Comparative Steel |
| B-40 | 0.01 | 0.07 | 44.2 | 0 | Good | Comparative Steel |

Table 4 (cont'd)

| Steel No. | Ferrite Decarburized Depth (mm) | Decarburized Depth (mm) | Toughness $uE_{20}$ $(J/cm^2)$ | Number of Times Break Occurred (counts/ 20 m) | Wiredrawability | Remarks |
|---|---|---|---|---|---|---|
| B-21 | 0.00 | 0.03 | 32.3 | 0 | Good | Inventive Steel |
| B-22 | 0.00 | 0.02 | 51.1 | 0 | Good | Inventive Steel |
| B-23 | 0.00 | 0.03 | 35.2 | 0 | Good | Inventive Steel |
| B-24 | 0.00 | 0.04 | 30.5 | 0 | Good | Inventive Steel |
| B-25 | 0.00 | 0.04 | 31.9 | 0 | Good | Inventive Steel |
| B-26 | 0.00 | 0.05 | 46.5 | 0 | Good | Inventive Steel |
| B-27 | 0.00 | 0.06 | 30.9 | 0 | Good | Inventive Steel |
| B-28 | 0.00 | 0.05 | 30.7 | 0 | Good | Inventive Steel |
| B-29 | 0.01 | 0.08 | 24.3 | 2 | Poor | Comparative Steel |
| B-30 | 0.00 | 0.03 | 23.1 | 2 | Poor | Comparative Steel |
| B-31 | 0.00 | 0.02 | 19.5 | 2 | Poor | Comparative Steel |
| B-32 | 0.00 | 0.05 | 21.2 | 2 | Poor | Comparative Steel |
| B-33 | 0.00 | 0.04 | 24.2 | 2 | Poor | Comparative Steel |
| B-34 | 0.00 | 0.02 | 43.3 | 0 | Good | Inventive Steel |
| B-35 | 0.00 | 0.03 | 41.5 | 0 | Good | Inventive Steel |
| B-36 | 0.00 | 0.02 | 43.6 | 0 | Good | Inventive Steel |
| B-37 | 0.00 | 0.05 | 39.5 | 0 | Good | Inventive Steel |
| B-38 | 0.00 | 0.04 | 39.9 | 0 | Good | Inventive Steel |
| B-39 | 0.00 | 0.11 | 23.5 | 3 | Poor | Comparative Steel |
| B-40 | 0.01 | 0.07 | 44.2 | 0 | Good | Comparative Steel |

## Claims

1. A spring steel comprising a chemical composition consisting of:

C: 0.35 mass% or more and 0.45 mass% or less,
Si: 1.75 mass% or more and 2.40 mass% or less,
Mn: 0.1 mass% or more and 1.0 mass% or less,
Cr: 0.01 mass% or more and less than 0.50 mass%,
Mo: 0.01 mass% or more and 1.00 mass% or less,
P: 0.025 mass% or less,
S: 0.025 mass% or less,
O: 0.0015 mass% or less, and
at least one selected from:

Sb: 0.035 mass% or more and 0.12 mass% or less and
Sn: 0.035 mass% or more and 0.20 mass% or less,

under conditions that

a DF value calculated by the following formula (1) is 0.23 or more and 1.50 or less,
a DT value calculated by the following formula (2) is 0.34 or more and 0.46 or less, and
a WD value calculated by the following formula (3) is not more than 255;

optionally further at least one element selected from

Al: 0.50 mass% or less,
Cu: 1.0 mass% or less,
Ni: 2.0 mass% or less
W: 2.0 mass% or less,
Nb: 0.1 mass% or less,
Ti: 0.2 mass% or less,
V: 0.5 mass% or less, and
B: 0.005 mass% or less, and

the balance being Fe and incidental impurities,

$$DF = [Si] / \{100 \times [C] \times ([Sn] + [Sb])\} \cdots\cdots (1)$$

$$DT = 10 \times [C] / \{5 \times [Si] + 2 \times [Sn] + 3 \times [Sb]\} \cdots\cdots (2)$$

$$WD = 544 \times [C] + 188 \times [Sn + Sb] \cdots\cdots (3)$$

, where [brackets] denote the content of an element in the brackets in mass%.

**Patentansprüche**

1. Federstahl, der eine chemische Zusammensetzung umfasst, die besteht aus:

C: 0,35 Masse-% oder mehr und 0,45 Masse-% oder weniger,
Si: 1,75 Masse-% oder mehr und 2,40 Masse-% oder weniger,
Mn: 0,1 Masse-% oder mehr und 1,0 Masse-% oder weniger,
Cr: 0,01 Masse-% oder mehr und weniger als 0,50 Masse-%,
Mo: 0,01 Masse-% oder mehr und 1,00 Masse-% oder weniger,
P: 0,025 Masse-% oder weniger,
S: 0,025 Masse-% oder weniger,
O: 0,0015 Masse-% oder weniger, und
wenigstens ein Element, das ausgewählt wird aus:

Sb: 0,035 Masse-% oder mehr und 0,12 Masse-% oder weniger, und
Sn: 0,035 Masse-% oder mehr und 0,20 Masse-% oder weniger,

unter den folgenden Bedingungen:

ein mit der Formel (1) berechneter Wert DF beträgt 0,23 oder mehr und 1,50 oder weniger,
ein mit der Formel (2) berechneter Wert DT beträgt 0,34 oder mehr und 0,46 oder weniger, und
ein mit der Formel (3) berechneter Wert WD beträgt nicht mehr als 255;

wahlweise des Weiteren wenigstens ein Element, das ausgewählt wird aus:

Al: 0,50 Masse-% oder weniger,
Cu: 1,0 Masse-% oder weniger,
Ni: 2,0 Masse-% oder weniger,
W: 2,0 Masse-% oder weniger,
Nb: 0,1 Masse-% oder weniger,
Ti: 0,2 Masse-% oder weniger,
V: 0,5 Masse-% oder weniger, und
B: 0,005 Masse-% oder weniger, und

wobei der Rest Fe und zufällige Verunreinigungen sind,

$$DF = [Si] \, / \, \{100 \times [C] \times ([Sn] + [Sb])\} \cdots\cdots (1)$$

$$DT = 10 \times [C] \, / \, \{5 \times [Si] + 2 \times [Sn] + 3 \times [Sb]\} \cdots\cdots (2)$$

$$WD = 544 \times [C] + 188 \times [Sn + Sb] \cdots\cdots (3),$$

wobei mit den Klammern [...] der Gehalt eines Elementes in den Klammern in Masse-% angegeben wird.

**Revendications**

1.  Acier à ressort comprenant une composition chimique constituée de :

C : 0,35 % en masse ou plus et 0,45 % en masse ou moins,
Si : 1,75 % en masse ou plus et 2,40 % en masse ou moins,
Mn : 0,1 % en masse ou plus et 1,0 % en masse ou moins,
Cr : 0,01 % en masse ou plus et moins de 0,50 % en masse,
Mo : 0,01 % en masse ou plus et 1,00 % en masse ou moins,
P : 0,025 % en masse ou moins,
S : 0,025 % en masse ou moins,
O : 0,0015 % en masse ou moins, et
l'un au moins choisi parmi :

Sb : 0,035 % en masse ou plus et 0,12 % en masse ou moins et
Sn : 0,035 % en masse ou plus et 0,20 % en masse ou moins,

aux conditions selon lesquelles

une valeur DF calculée par la formule (1) ci-après vaille 0,23 ou plus et 1,50 ou moins,
une valeur DT calculée par la formule (2) ci-après vaille 0,34 ou plus et 0,46 ou moins, et
une valeur WD calculée par la formule (3) ci-après ne dépasse pas 255 ;

éventuellement en outre au moins un élément choisi parmi

Al : 0,50 % en masse ou moins,
Cu : 1,0 % en masse ou moins,
Ni : 2,0 % en masse ou moins,
W : 2,0 % en masse ou moins,
Nb : 0,1 % en masse ou moins,
Ti : 0,2 % en masse ou moins,
V : 0,5 % en masse ou moins et
B : 0,005 % en masse ou moins, et
le reste étant du Fe et des impuretés inévitables,

$$DF = [Si] / \{100 \times [C] \times ([Sn] + [Sb])\} \qquad (1)$$

$$DT = 10 \times [C] / \{5 \times [Si] + 2 \times [Sn] + 3 \times [Sb]\} \qquad (2)$$

$$WD = 544 \times [C] + 188 \times [Sn + Sb] \qquad (3)$$

, où les [crochets] indiquent la teneur d'un élément entre les crochets en % en masse.

# FIG. 1

FIG. 2

## FIG. 3

Ferrite Decarburization Occurred In Surface Layer

## FIG. 4

No Ferrite Decarburization Occurred In Surface Layer

# FIG. 5

No Ferrite Decarburization,
but Other Decarburization Occurred

Decarburization
(Other Than Ferrite Decarburization)

**REFERENCES CITED IN THE DESCRIPTION**

**Patent documents cited in the description**

- JP 2003105496 A
- JP 2009068030 A
- JP 2003268453 A

- JP 8176737 A
- JP 6072282 B
- JP S63216951 A